# EUROPEAN PATENT SPECIFICATION

(11) **EP 0 965 181 B1**
(45) Date of publication and mention of the grant of the patent: **23.06.2004**
(21) Application number: 96923526.6
(22) Date of filing: 27.06.1996
(51) Int. Cl.: H04B 3/54, H04B 3/56

(54) **POWER LINE COMMUNICATIONS SYSTEM**
NETZLEITUNGSÜBERTRAGUNGSSYSTEM
SYSTEME DE COMMUNICATIONS PAR LIGNE ELECTRIQUE

(43) Date of publication of application: 22.12.1999
(73) Proprietor: PHONEX CORPORATION, Midvale, UT 84047-3756 (US)
(72) Inventor: PATEL, Chandrakant, Bhailalbhai, Hopewell, NJ 08525-3114 (US); HARFORD, Jack, Rudy, Flemington, NJ 08822 (US); PUDLES, Stephen, B., Longwood, FL 32779 (US); ADER, Joseph, Robert, Yardley, PA 19067 (US)
(74) Representative: Bublak, Wolfgang, Dr.
(86) International application number: PCT/US1996/011062
(87) International publication number: WO 1997/050193

(56) References cited:
- WO-A-92/21194
- US-A- 4 847 903

## Description

### TECHNICAL FIELD

The present invention relates, in general, to the communication of information and, in particular, to the transmission and reception of information signals along the power lines in a building.

### BACKGROUND OF THE INVENTION

The lines by which power is distributed in a building can be and are used for the transmission of information signals between rooms within a building. Power lines can exhibit severe amplitude variations in the frequency bands used for power line communication. These amplitude variations are due to a number of factors such as unterminated (i.e. open) outlets, the number and type of units (e.g. lamps, appliances, heaters, etc.) which are plugged into the outlets, the cycling of certain units (e.g. heaters) which are plugged into the outlets, and the lengths of the power lines between the outlets.

When the power line communications system is used to transmit television signals, most of the amplitude variations are "dips" in the order of 10dB to 20dB which are spread over a few or more hundreds of kilohertz. Such "dips" can be tolerated in that the signals can be amplified to the extent necessary, or the subjective effects of these dips on the picture quality is acceptable..

However, at some frequencies, the attenuation can be in the order of 50dB or 60dB or even 70dB and spread over less than 100 Khz. Such a sharp attenuation is called a "notch" or "suck-out." If critical signal information (e.g. the most important part for picture information of a television signal) happens to fall at a notch, it is highly attenuated and very difficult, if not impossible, to amplify to provide expected system performance.

For television signals, critical information is around the picture carrier. If such a notch is near the picture carrier, the circuitry by which information signal input of the television set is connected to the power line might not be able to provide the required gain (i.e. Automatic Gain Control), while maintaining the desired signal-to-noise (S/N) ratio in its output. It is possible that the circuitry in the television set connected to the power line might not be able to derive synchronizing information for satisfactory operation.

From WO 92/21194 it is known that a first carrier is positioned at a first frequency, namely 118 kHz for the US, so as to avoid interference and its determinable harmonics. Here, the notches are the result of resonances caused by the lumped and residual reactance associated with the equipments and line filters, as well as standing waves on the line. From this WO-document, a transmitter unit is known according to the preamble of claim 5, which can be used in power line communications systems according to the preamble of claim 1. However, this device known therefrom is not able to provide switching of a first carrier at a predetermined frequency if a notch is present.

From US-A-4 847 903 a wireless remote speaker system is known which comprises separate transmitter and receiver sections in which signals are transmitted over AC lines. In such a system, the problem of notches is not even addressed.

### SUMMARY OF THE INVENTION

The present invention is directed to alleviating the effects of severe attenuation of signals carrying critical information in a power line communications system. A power line communications system, constructed in accordance with the present invention, includes first signal conducting means for supplying information signals over a first band of frequencies from an information signal source, a power line and a plurality of outlets individually connected to the power line, including a first outlet at which the information signals are transmitted and a second outlet at which the information signals are received. The information signals are conducted to the power line by a transmitter unit and are conducted from the power line by a receiver unit. The transmitter unit includes first oscillator means for supplying a first carrier signal, control means for controlling the oscillator means to set the first carrier signal at a first predetermined frequency dependent upon the frequency band of a notch in the frequency response characteristic of a first of the outlets to which the transmitter unit is intended to be connected, and first multiplier means for frequency multiplying the first carrier signal and the information signals to frequency shift the information signals to a second band of frequencies. The transmitter unit also includes second signal conducting means for conducting the information signals after frequency shifting by the first multiplier means to a first of the outlets for transmission of the information signals along the power line to a second of the outlets. A power line communications system, constructed in accordance with present invention, also includes a receiver unit which includes third signal conducting means for conducting the information signals from the second outlet, second oscillator means for supplying a second carrier signal having a second predetermined frequency, and second multiplier means for frequency multiplying the second carrier signal and the information signals conducted by the second conducting means to frequency shift the information signals conducted by the second signal conducting means to a band of frequencies at least approximately the same as the first band of frequencies. The receiver unit also includes fourth signal conducting means for conducting the information signals after frequency shifting by the second multiplier means to a utilization unit.

While the present invention will be described in connection with the transmission and reception of television signals, a power line communications system, constructed in accordance with the present invention, has broader application and can be used to transmit and receive other types of information signals (e.g. telephones, computers, etc.).

### BRIEF DESCRIPTION OF THE DRAWINGS

Figure 1 shows a frequency response characteristic at an outlet of a power line communication system having a notch and modulated television signals transmitted along a power line to which the outlet is connected.
Figure 2 is a block diagram of a power line communications system constructed in accordance with the present invention in which the effect of the notch in the frequency response characteristic of Figure 1 is alleviated.
Figure 3 is a block diagram of the transmitter unit portion of the Figure 2 power line communications system of Figure 2.
Figure 4 is a block diagram of the receiver unit portion of the Figure 2 power line communications system of Figure 2.
Figure 5 is a perspective view of the housing which contains either the Figure 3 transmitter unit or the Figure 4 receiver unit as the housing is being plugged into an outlet.

### DETAILED DESCRIPTION OF THE INVENTION

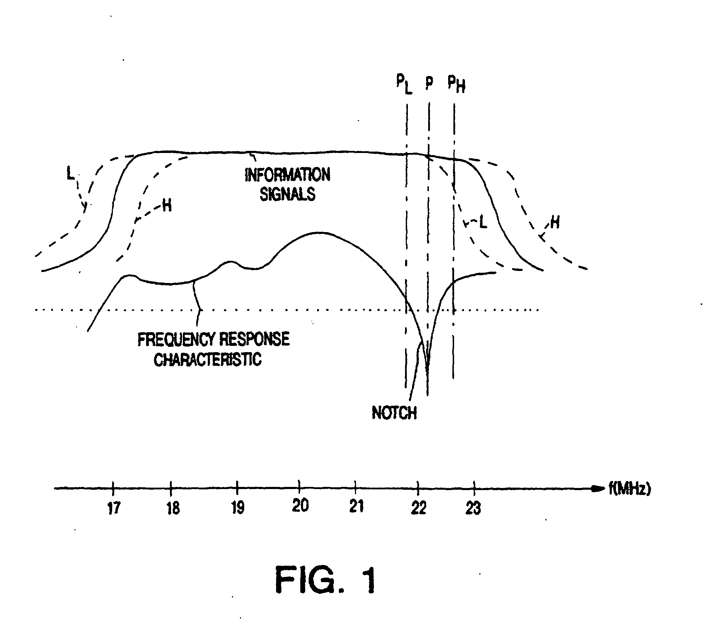

As indicated above, a frequency response characteristic, such as the one illustrated in Figure 1, for an outlet in a power line communications system can result in the loss of the most important part of the information signal transmitted along the system and intended for reception by a utilization unit. The information signals received by the utilization unit are affected by the original transmitted signal and the characteristics of the power line communications system existing between a first outlet at which the information signals are transmitted along the power line and a second outlet at which the information signals are received. If the information signal is, for example, a television signals and the picture information portion centered at **P** of the television signal happens to fall at a **NOTCH** in the frequency response characteristic, the picture information portion of the television signal is highly attenuated and it is very difficult, if not impossible, to appropriately amplify the picture information portion of the television signal in the circuitry by which the utilization unit is connected to the power line, while maintaining the desired signal-to-noise (S/N) ratio and provide expected system performance. It is possible that the circuitry in a television set connected to the power line, might not be able to derive synchronizing information for satisfactory operation.

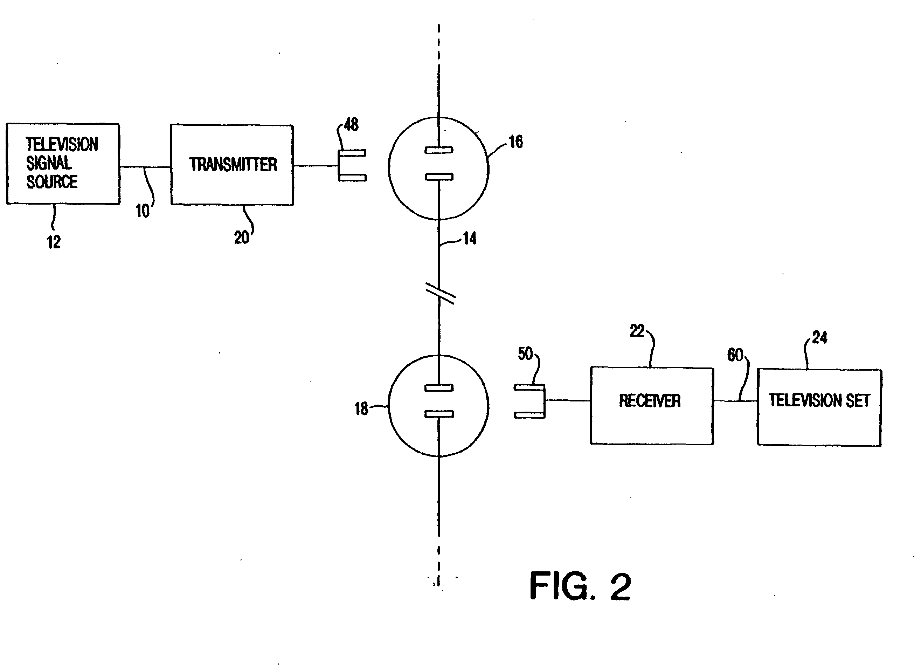

Referring to Figure 2, a power line communications system, constructed in accordance with the present invention, includes first signal conducting means, represented by a line **10,** for supplying information signals over a first band of frequencies from an information signal source, such as a television signal source **12** by which cable television signals are delivered to a building.

This power line communications system also includes a power line **14** and a plurality of outlets **16** and **18** individually connected to power line **10.** The information signals are transmitted along the power from outlet **16** and are received at outlet **18**. These outlets may be connected directly by power line wires or may have circuit breakers or fuses in their path and may be on different phases of the power line.

As is well known, the reception and processing of television signals from a cable television connection box or a VCR requires selecting between channel 3 or channel 4 depending upon which of the two is not an active channel for the particular location. For a channel 3 setting of the power line communications system, the information signals supplied from cable television connection box **18** are, ideally, over a band from 60 Mhz to 66 Mhz. For a channel 4 setting of the power line communications system, the information signals supplied from cable television connection box **18** are, ideally, over a band from 66 Mhz to 72 Mhz.

The Figure 2 power line communications system also includes a transmitter unit **20** and a receiver unit **22.** Transmitter unit **20** receives the information signals and is adapted for connection to power line **14** to conduct the information signals to the power line. Receiver **22** also is adapted for connection to power line **14** and conducts the information signals to a utilization unit, such as a television set **24.**

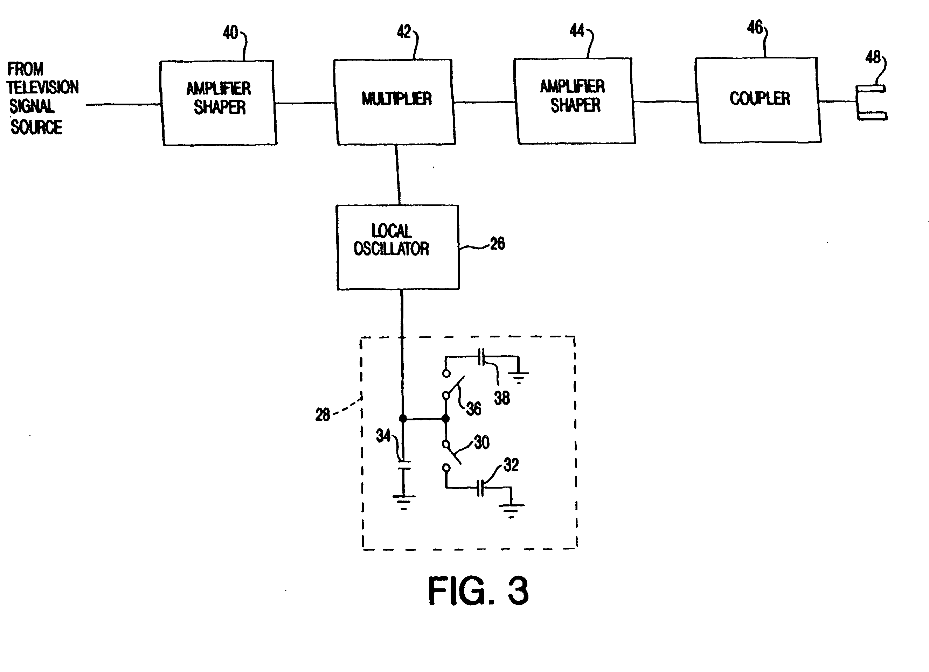

Referring to Figure 3, transmitter unit **20** includes first local oscillator means **26** for supplying a first carrier signal and control means **28** for controlling first local oscillator means **26** to set the first carrier signal at a first predetermined frequency dependent upon the frequency band of a notch in the frequency response characteristic between a first of the outlets, namely outlet **16** to which transmitter unit **20** is intended to be connected, and a second of the outlets, namely outlet **18** to which receiver unit **22** is intended to be connected. Control means **28** can be in the form of a capacitor/switching network such as the one shown in Figure 3. For the transmission and reception of television signals, a first switch **30** and a first capacitor **32** serve to select between channel 3 or channel 4 operation. For a channel 3 setting of the power line communications system, with switch **30** closed and capacitor **32** placed in parallel with a second capacitor **34,** the first carrier signal supplied by first local oscillator means **26** can be 83 Mhz. For a channel 4 setting of the power line communications system, with switch **30** open and capacitor **32** out of the network, the first carrier signal supplied by first local oscillator means can be 89 Mhz. A second switch **36** and a third capacitor **38** serve to alleviate, as will be explained below, the effects of a notch in the frequency characteristic between outlet **16** to which transmitter unit **20** is adapted for connection and outlet **18** to which receiver unit **22** is adapted for connection.

Preferably, transmitter unit **20** includes first amplifier and shaper means **40** for amplifying and shaping the information signals supplied by television signal source **12**. Signals outside the range of frequencies of the information signals (e.g. **60** Mhz to **72** Mhz for television signals) are attenuated by amplifier and shaper means **40**.

Transmitter unit **20** also includes first multiplier means **42** for frequency multiplying the first carrier signal supplied by first local oscillator means **26** and the information signals (e.g. either in the channel **3** band or the channel **4** band for television signals) to frequency shift the information signals to a second band of frequencies selected for power line transmission. This is shown in Figure 1 by the 6 Mhz band of the information signals extending between, for example, 17 Mhz and 23 Mhz. The amount of frequency shifting of the information signals is selected so that the frequencies of the information signals are below the 40 Mhz upper limit of operation of power line communication systems set by the government.

For the conditions illustrated by the solid line curves of the INFORMATION SIGNALS and the FREQUENCY RESPONSE CHARACTERISTIC in Figure 1, picture information portion P of the television signal, extending over a band of approximately 500 KHZ, falls at a NOTCH in the FREQUENCY RESPONSE CHARACTERISTIC which extends below an acceptable level illustrated by the dotted line. Those portions of the television signal, specifically the picture information portion P, falling within the band defined by where the dotted line crosses the FREQUENCY RESPONSE CHARACTERISTIC are likely to be lost due to severe attenuation.

To alleviate this problem, switch **36** in Figure 3 is closed and capacitor **38** is placed in parallel with capacitor **34**. This changes the frequency of the first carrier signal supplied by first local oscillator means **26** a few hundreds of kilohertz, for example 300 KHz, to either 83.3 Mhz or 82.7 MHz for a channel 3 setting of switch **30** or 89.3 Mhz or 88.7 MHz for a channel 4 setting of switch **30.** As indicated by the dashed line curves **L-L** and **H-H** in Figure 1, this results in a different frequency shift of the television signal supplied to first multiplier means **42.** Curve **L-L** corresponds to the "low" product of multiplication by first multiplier means **42** and extends between approximately 16.70 Mhz and approximately 22.70 Mhz with **P**_{**L**}**,** corresponding to the picture information portion **P** of the television signal, above where the dotted line crosses the FREQUENCY RESPONSE CHARACTERISTIC. Curve **H-H** corresponds to the "high" product of multiplication by first multiplier means **42** and extends between approximately 17.20 Mhz and approximately 23.20 Mhz with P_{H}, corresponding to the picture information portion **P** of the television signal, above where the dotted line crosses the FREQUENCY RESPONSE CHARACTERISTIC. One or the other of the products of the multiplication by multiplier means **42** can be used for the particular power line communications system.

Preferably, transmitter unit **20** includes second amplifier and shaper means **44** for amplifying and shaping the information signals after frequency shifting of the information signals by first multiplier means **42** and first coupler means **46** which provide filtering, isolation and impedance matching.

Transmitter unit **20** also includes second signal conducting means, in the form of a plug **48**, for conducting to outlet **16** the information signals coupled to plug **48** after frequency shifting by first multiplier means **42** and amplifying and shaping of the information signals by first amplifier and shaper means **44.** The information signals conducted to outlet **16** are transmitted along power line **14** to outlet **18.**

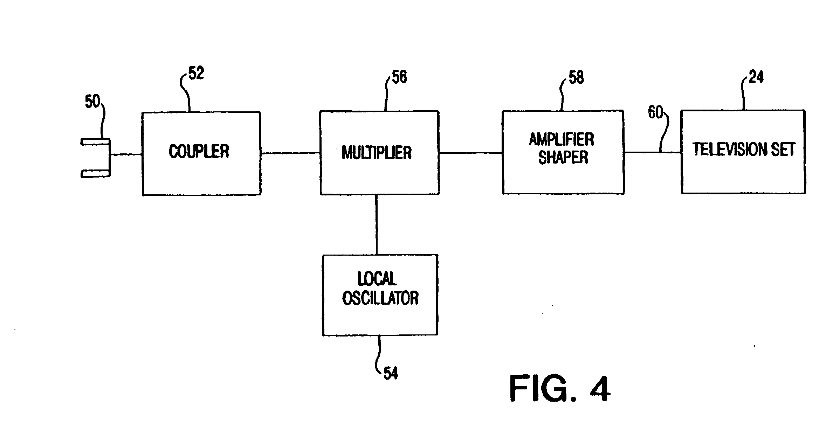

Referring to Figure **4,** receiver unit **22** includes third signal conducting means, in the form of a plug **50**, for conducting the information signals from outlet **18**. Preferably, receiver unit **22** includes second coupler means **52** which provide isolation, impedance matching, and filtering.

Receiver unit 22 also includes second local oscillator means 54 for supplying a second carrier signal having a second predetermined frequency and second multiplier means **56** for frequency multiplying the second carrier signal and the information signals conducted by plug **50** to frequency shift the information signals conducted by plug **50** to a band of frequencies at least approximately the same as the first band of frequencies. With the utilization unit (e.g. a television set) arranged to receive information signals over a specific band of frequencies (e.g. 60 Mhz to 66 Mhz for channel 3 or 66 Mhz to 72 Mhz for channel 4), the information signals must be returned, from the frequency band over which the information signals are transmitted and received by the power line communications system, to at least approximately the frequency band at which they can be used by the utilization equipment. Second local oscillator means **54** is arranged to provide a second carrier signal having the requisite frequency such that, when the second carrier signal is multiplied with the information signals by second multiplier means **56**, the information signals are frequency shifted to the requisite band of frequencies. For a television signal, second local oscillator means **54** is set to supply either one of two carrier signals corresponding to either channel 3 operation or channel 4 operation. To the extent that the frequency shifting of the information signals in the transmitter unit **20** has been influenced by switch **36** being closed to alleviate the effects of a NOTCH in the frequency response characteristic, the second band of frequencies of the output of second multiplier means **56** will be only approximately the same as the first band of frequencies of the information signals supplied to transmitter unit **20.** However, television set **24** can accommodate television signals having portions outside the prescribed 6 Mhz band for a particular channel.

Preferably, receiver unit **22** includes second amplifier and shaper means **58** for amplifying and shaping the information signals after frequency shifting of the information signals by second multiplier means **56.**

Receiver unit **22** also includes fourth signal conducting means, represented by a line **60,** for conducting to a utilization unit the information signals after frequency shifting by second multiplier means **56** and amplifying and shaping of the information signals by third amplifier and shaper means **58**.

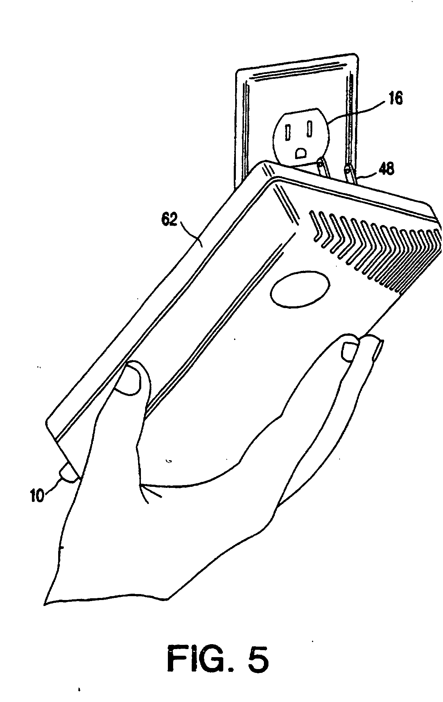

The components of transmitter unit **20**, namely first local oscillator means **26**, control means **28**, first amplifier and shaper means **40**, first multiplier means **42**, second amplifier and shaper means **44**, and first coupler means **46** can be arranged in a housing **62,** such as the one shown in Figure 5. Plug **48,** by which transmitter unit **22** is connected to outlet **16,** and connector **10,** by which information signals from an information signal source are supplied to the transmitter unit, are fixed to and extend from housing **62**. The components of receiver unit **22** can be arranged in a similar housing with plug **50** and connector **60** fixed to and extending from the housing.

As indicated above, the present invention has application for communication of information signals other than television. For example, a power line communications system, constructed in accordance with the present invention, can be used to transmit and receive telephone signals. For telephone signals, the entire audio signal can get lost in a notch because the audio frequency band is relatively narrow.

Because telephony involves two-way communication, both the location at which the telephone signal enters the power line and the location of an extension have a transmitter/receiver unit which is a combination of the transmitter unit of Figure 3 and the receiver unit of Figure 4. If the notch switch in the transmitter/receiver unit at the location at which the telephone signal enters the building is closed, the notch switch in the transmitter/receiver unit at the location of an extension also must be closed. Typical carrier frequencies for the local oscillators are 5.5 Mhz and 6.5 Mhz, one for each direction of transmission.

While in the foregoing there have been described preferred embodiments of the present invention, it should be understood by those skilled in the art that various modifications and changes can be made without departing from the scope of the present invention.

## Claims

1. A power line communications system comprising:
first signal conducting means (10) for supplying information signals over a first band of frequencies from an information signal source (12);
a power line (14);
a plurality of outlets individually connected to said power line (14), including a first outlet (16) at which said information signals are transmitted and a second outlet (18) at which said information signals are received:
a transmitter unit (20) connected to said first outlet (16) and including:
(a) first oscillator means (26) for supplying a first carrier signal,
(b) control means (28) for controlling said oscillator means (26) to set said first carrier signal at a first predetermined frequency dependent upon the frequency band of a notch in the frequency response characteristic between said first and said second outlets (16,18),
(c) first multiplier means (42) for frequency multiplying said first carrier signal and said information signals to frequency shift said information signals to a second band of frequencies, and
(d) second signal conducting means (48) for conducting said information signals after frequency shifting by said first multiplier means (42) to said first outlet (16) for transmission of said information signals along said power line (14) to said second outlet (18); and
a receiver unit (22) connected to said second outlet (18) and including:
(a) third signal conducting means (50) for conducting said information signals from said second outlet (18),
(b) second oscillator means (54) for supplying a second carrier signal having a second predetermined frequency,
(c) second multiplier means (56) for frequency multiplying said second carrier signal and said information signals conducted by said second conducting means (48) to frequency shift said information signals conducted by said second signal conducting to a band of frequencies at least approximately the same as said first band of frequencies, and
(d) fourth signal conducting means (60) for conducting said information signals after frequency shifting by said second multiplier means (56) to a utilization unit (24);
wherein said transmitter unit (20) further includes:
(a) first amplifier and shaper means (40) for amplifying and shaping said information signals supplied by said first signal conducting means (10) from the information signal source (12),
(b) second amplifier and shaper means (44) for amplifying and shaping said information signals after frequency shifting of said information signals by said first multiplier means (42), and
(c) first coupler means (46) for coupling said information signals to said second signal conducting means (48) after frequency shining of said information signals by said first multiplier means (42) and amplifying and shaping of said information signals by said second amplifier and shaper means (44); and
wherein said receiver unit (22) further includes:
(a) second coupler means (52) for coupling said information signals conducted by said second conducting means (50) to said second multiplier means (56), and
(b) third amplifier and shaper means (58) for amplifying and shaping said information signals after frequency shifting of said information signals by said second multiplier means (56);
**characterized in that**
said control means (28) include a switch (30) for controlling said first oscillator means (26) to selectively set said first carrier signal at said first predetermined frequency if said frequency response characteristic between said first outlet (16) and said second outlet (18) has a notch.

2. A power line communications system according to claim 1 wherein said information signals are television signals and the utilization unit is a television set (24).

3. A power line communications system according to claim 2 wherein said control means (28) control said first oscillator means (26) to selectively set said first carrier signal at said first predetermined frequency dependent upon channel 3 or channel 4 operation of the television set (24).

4. A power line communications system according to claim 2 wherein said control means (28) include:
(1) a first switch (30) for controlling said first oscillator means (26) to selectively set said first carrier signal at said first predetermined frequency dependent upon channel 3 or channel 4 operation of the television set (24), and
(2) a second switch (36) for controlling said first oscillator means (26) to selectively set said first carrier signal at said first predetermined frequency if said frequency response characteristic between said first outlet (16) and said second outlet (18) has a notch.

5. A transmitter unit for a power line communications system comprising:
signal conducting means (10) for supplying information signals over a first band of frequencies from an information signal source (12);
local oscillator means (26) for supplying a carrier signal;
control means (28) for controlling said local oscillator means to set said carrier signal at a predetermined frequency dependent upon the frequency band of a notch in the frequency response characteristic between a first outlet (16) in the power line communications system to which the transmitter unit (20) is adapted for connection and a second outlet (18) in the power line communications system to which a transmitter unit (20) is adapted for connection;
multiplier means (42) for frequency multiplying said carrier signal and said information signals to frequency shift said information signals to a second band of frequencies;
signal conducting means (48) for conducting said information signals after frequency shifting by said multiplier means (42) to the first outlet (16) in the power line communications system for transmission of said information signals along a power line (14) in the power line communications system to the second outlet (18) in the power line communications system;
(1) first amplifier and shaper means (40) for amplifying and shaping said information signals supplied by said signal conducting means (10) from the information signal source (12),
(2) second amplifier and shaper means (44) for amplifying and shaping said information signals after frequency shifting of said information signals by said multiplier means (42); and
(3) coupler means (46) for coupling said information signals to said signal conducting means (48) conducting by which said information signals are conducted to the first outlet (16) in the power line communications system after frequency shifting of said information signals by said multiplier means (42) and amplifying and shaping of said information signals by said amplifier and shaper means (44),
**characterized in that**
said control means (28) include a switch (30) for controlling said local oscillator means (26) to selectively set said carrier signal at said predetermined frequency if said frequency response characteristic between the first outlet (16) in the power line communications system to which the transmitter unit (20) is adapted for connection and the second outlet (18) in the power line communications system to which a transmitter unit (20) is adapted for connection of said first outlet (16) has a notch.

6. A transmitter unit for a power line communications system according to claim 5 wherein said information signals are television signals.

7. A transmitter unit for a power line communications system according to claim 6 wherein said control means (28) control said local oscillator means (26) to selectively set said carrier signal at said predetermined frequency dependent upon channel 3 or channel 4 operation.

8. A transmitter unit for a power line communications system according to claim 6 wherein said control means (28) include:
(1) a first switch (30) for controlling said local oscillator means (26) to selectively set said carrier signal at said predetermined frequency dependent upon channel 3 or channel 4 operation, and
(2) a second switch (36) for controlling said local oscillator means (26) to selectively set said carrier signal at said predetermined frequency if said frequency response characteristic between the first outlet (16) in the power line communications system to which the transmitter unit (20) is adapted for connection and the second outlet (18) in the power line communications system to which a transmitter unit (20) is adapted for connection of said first outlet (16) has a notch.

9. A method of eliminating the effect of a notch in the frequency response characteristic between first and second outlets (16,18) in a power line communications system comprising the steps of:
supplying information signals over a first band of frequencies from an information signal source (12);
supplying a first carrier signal;
controlling the frequency of said first carrier signal to set the frequency of said first carrier signal at a first predetermined frequency dependent upon a frequency band of a notch in a frequency response characteristic between first and second outlets (16,18) connected to a power line (14);
multiplying said information signals by said first carrier signal after the frequency of said first carrier signal has been set to shift the frequency of said information signals to a second band of frequencies spaced from the frequency band of a notch in the frequency response characteristic between said first and second outlets (16,18) connected to a power line (14);
conducting said information signals after the frequency of said information signals has been shifted to said first outlet (16) for transmission of said information signals along a power line (14) to said second outlet (18);
conducting said information signals from said second outlet (18); supplying a second carrier signal having a second predetermined frequency;
multiplying said information signals conducted from said second outlet (18) by said second carrier signal to shift the frequency of said information signals conducted from said second outlet (18) to a band of frequencies at least approximately the same as said first band of frequencies; and
conducting said information signals conducted from said second outlet (18) after the frequency of said information signals conducted from said second outlet (18) has been shifted to a utilization unit (24),
wherein:
(a) said information signal source (12) is a television signal source,
(b) said utilization unit is a television set (24), and
(c) the step of controlling the frequency of said first carrier includes the steps of:
(1) controlling the frequency of said first carrier signal to selectively set said first carrier signal at said first predetermined frequency dependent upon channel 3 or channel 4 operation of the television set (24), and
(2) controlling the frequency of said first carrier signal to selectively set said first carrier signal at said first predetermined frequency dependent upon said frequency response characteristic between said first outlet (16) and said second outlet (18) having a notch.

## Patentansprüche

1. Ein Netzleitungskommunikationssystem aufweisend:
erste Signalleitungsmittel (10) zum Bereitstellen von Informationssignalen über ein erstes Frequenzband von einer Informationssignalquelle (12);
eine Netzleitung (14);
eine Mehrzahl von Steckdosen, welche individuell an die Netzleitung (14) angeschlossen sind, umfassend eine erste Steckdose (16), an der die Informationssignale gesendet werden und eine zweite Steckdose (18) an der die Informationssignale empfangen werden;
eine Sendeeinheit (20) welche mit der ersten Steckdose (16) verbunden ist und umfasst:
(a) erste Oszillatormittel (26) zum Bereitstellen eines ersten Trägersignals;
(b) Steuermittel (28) zum Steuern der Oszillatormittel (26) um das erste Trägersignal auf eine erste vorbestimmte Frequenz einzustellen, in Abhängigkeit des Frequenzbandes einer Kerbe in der Frequenzantwortcharakteristik zwischen der ersten und der zweiten Steckdose (16, 18);
(c) erste Multiplikatormittel (42) zum Multiplizieren der Frequenz des ersten Trägersignals und des Informationssignals, um das Informationssignal auf ein zweites Frequenzband frequenzzuverschieben; und
(d) zweite Signalleitungsmittel (48) zum Leiten der Informationssignale nach der Frequenzverschiebung durch die ersten Multiplikatormittel (42) zu der ersten Steckdose 16 zum Senden der Informationssignale über die Netzleitung (14) zu der zweiten Steckdose (18); und
eine Empfängereinheit (22), welche mit der zweiten Steckdose (18) verbunden ist, und umfasst:
(a) dritte Signalleitungsmittel (50), zum Leiten der Informationssignale von der zweiten Steckdose (18);
(b) zweite Oszillatormittel (54), zum Bereitstellen eines zweiten Trägersignals, welches eine zweite vorbestimmte Frequenz aufweist;
(c) zweite Multiplikatormittel (56), zum Multiplizieren der Frequenz des zweiten Trägersignals und der Informationssignale, die durch die zweiten Leitungsmittel (48) geleitet werden, um die Informationssignale, die durch die zweiten Signalleitungsmittel geleitet werden auf ein Frequenzband frequenzzuverschieben, welches zumindest näherungsweise das gleiche ist, wie das erste Frequenzband; und
(d) vierte Signalleitungsmittel (60) zum Leiten der Informationssignale nach der Frequenzverschiebung durch die zweiten Multiplikatormittel (56) an eine Verwendungseinheit (24);
wobei die Sendeeinheit (20) weiterhin aufweist
(a) erste Verstärker und Formmittel (40) zum Verstärken und Formen der Informationssignale, welche durch die ersten Signalleitungsmittel (10) von der Informationssignalsquelle (12) bereitgestellt wurden;
(b) zweite Verstärker und Formmittel (44), zum Verstärken und Formen der Informationssignale nach der Frequenzverschiebung der Informationssignale durch die ersten Multiplikatormittel (42); und
(c) erste Kopplermittel (46), zum Koppeln der Informationssignale an die zweiten Signalleitungsmittel (48) nach der Frequenzverschiebung der Informationssignale durch die ersten Multiplikatormittel (42) und Verstärken und Formen der Informationssignale durch die zweiten Verstärker- und Formmittel (44); und
wobei die Empfängereinheit (22) weiterhin umfasst:
(a) zweite Kopplermittel (52) zum Koppeln der Informationssignale, die von den zweiten Leitungsmitteln (50) an die zweiten Multiplikatormittel (56) geleitet werden; und
(b) dritte Verstärker- und Formmittel (58) zum Verstärken und Formen der Informationssignale nach der Frequenzverschiebung der Informationssignale durch die zweiten Multiplikatormittel (56);
**dadurch gekennzeichnet, dass**
die Steuermittel (28) einen Schalter (30) aufweisen, um die ersten Oszillatormittel (26) zu steuern, um selektiv das erste Trägersignal auf die erste vorbestimmte Frequenz einzustellen, wenn die Frequenzantwortcharakteristik zwischen der ersten Steckdose (16) und der zweiten Steckdose (18) eine Kerbe aufweist.

2. Ein Netzleitungskommunikationssystem gemäß Anspruch 1, wobei die Informationssignale Fernsehsignale sind, und die Verwendungseinheit ein Femsehgerät (24) ist.

3. Ein Netzleitungskommunikationssystem gemäß Anspruch 2, wobei die Steuermittel (28) die ersten Oszillatormittel (26) steuern, um selektiv das erste Trägersignal auf die erste vorbestimmte Frequenz einzustellen, in Abhängigkeit des Kanal 3 oder Kanal 4 Betriebs des Fernsehgeräts (24).

4. Ein Netzleitungskommunikationssystem gemäß Anspruch 2, wobei das Steuermittel (28) aufweist:
(1) Einen ersten Schalter (30) zum Steuern der ersten Oszillatormittel (26) um selektiv das erste Trägersignal auf die erste vorbestimmte Frequenz einzustellen, in Abhängigkeit von einem Kanal 3 oder Kanal 4 Betrieb des Fernsehgeräts (24); und
(2) ein zweiter Schalter (36) zum Steuern des ersten Oszillatormittels (26), um selektiv das erste Trägersignal auf die erste vorbestimmte Frequenz einzustellen, wenn die Frequenzantwortcharakteristik zwischen der ersten Steckdose (16) und der zweiten Steckdose (18) eine Kerbe aufweist.

5. Eine Sendeeinheit für ein Netzleitungskommunikationssystem aufweisend:
Signalleitungsmittel (10) zum Bereitstellen von Informationssignalen über ein erstes Frequenzband von einer Informationssignalquelle (12);
Lokale Oszillatormittel (26) zum Bereitstellen eines Trägersignals;
Steuermittel (28) zum Steuern der lokalen Oszillatormittel, um das Trägersignal auf eine vorbestimmte Frequenz einzustellen, in Abhängigkeit des Frequenzbandes einer Kerbe in der Frequenzantwortcharakteristik zwischen einer ersten Steckdose (16) in dem Netzleitungskommunikationssystem, an die eine Sendeeinheit (20) angeschlossen werden kann, und einer zweiten Steckdose (18) in dem Netzleitungskommunikationssystem, an die eine Sendeeinheit
(20) angeschlossen werden kann;
Multiplikatorrnittel (42) zum Multiplizieren der Frequenz des Trägersignals und der Informationssignale, um die Informationssignale auf ein zweites Frequenzband frequenzzuverschieben;
Signalleitungsmittel (48), zum Leiten der Informationssignale nach der Frequenzverschiebung durch die Multiplikatormittel (42) zu der ersten Steckdose (16) in dem Netzleitungskommunikationssystem, zum Senden der Informationssignale über eine Netzleitung (14) in dem Netzleitungskommunikationssystem zu einer zweiten Steckdose (18) in dem Netzleitungskommunikationssystem;
(1) Erste Verstärker- und Formmittel (40) zum Verstärken und Formen der Informationssignale, welche durch die Signalleitungsmittel (10) von der Informationssignalquelle (12) bereit gestellt werden;
(2) zweite Verstärker- und Formmittel (44) zum Verstärken und Formen der Informationssignale nach der Frequenzverschiebung der Informationssignale durch die Multiplikatormittel (42); und
(3) Kopplermittel (46), zum Koppeln der Informationssignale zu dem Signalleitungsmittel (48), welches leitet, durch das die Informationssignale zu der ersten Steckdose (16) in dem Netzleitungskommunikationssystem geleitet werden, nach der Frequenzverschiebung der Informationssignale durch die Multiplikatormittel (42) und Verstärken und Formen der Informationssignale durch die Verstärker und Formmittel (44),
**dadurch gekennzeichnet, dass**
das Steuermittel (28) einen Schalter (30) aufweist, um die lokalen Oszillatormittel (26) zu steuern, um selektiv das Trägersignal auf die vorbestimmte Frequenz einzustellen, wenn die Frequenzantwortcharakteristik eine Kerbe zwischen der ersten Steckdose (16) in dem Netzleitungskommunikationssystem, an die die Sendeeinheit (20) angeschlossen werden kann, und der zweiten Steckdose (18) in dem Netzleitungskommunikationssystem, an die eine Sendeeinheit (20) angeschlossen werden kann, um mit der ersten Steckdose (16) verbunden zu sein, aufweist.

6. Eine Sendeeinheit für ein Netzleitungskommunikationssystem gemäß Anspruch 5, wobei die Informationssignale Fernsehsignale sind.

7. Eine Sendeeinheit für ein Netzleitungskommunikationssystem gemäß Anspruch 6, wobei die Steuermittel (28) die lokalen Oszillatormittel (26) steuern, um selektiv das Trägersignal auf eine vorbestimmte Frequenz einzustellen, in Abhängigkeit eines Kanal 3 oder Kanal 4 Betriebes.

8. Eine Sendereinheit für ein Netzleitungskommunikationssystem gem. Anspruch 6, wobei das Steuermittel (28) umfasst:
(1) Einen ersten Schalter (30) zum Steuern der lokalen Oszillatormittel (26), um selektiv das Trägersignal auf die vorbestimmte Frequenz einzustellen, in Abhängigkeit eines Kanal 3 oder Kanal 4 Betriebs; und
(2) ein zweiter Schalter (36) zum Steuern der lokalen Oszillatormittel (26), um selektiv das Trägersignal auf die vorbestimmte Frequenz einzustellen, wenn die Frequenzantwortcharakteristik eine Kerbe zwischen der ersten Steckdose (16) in dem Netzleitungskommunikationssystem, an die die Sendeeinheit (20) angeschlossen werden kann, und der zweiten Steckdose (18) in dem Netzleitungskommunikationssystem, an die eine Sendereinheit (20) angeschlossen werden kann, um mit der ersten Steckdose (16) verbunden zu sein, aufweist.

9. Ein Verfahren zum Eliminieren des Effekts einer Kerbe in der Frequenzantwortcharakteristik zwischen ersten und zweiten Steckdosen (16, 18) in einem Netzleitungskommunikationssystem aufweisend die Schritte:
Bereitstellen von Infarmationssignalen über ein erstes Frequenzband von einer Informationssignalquelle (12);
Bereitstellen eines ersten Trägersignals;
Steuern der Frequenz des ersten Trägersignals, um die Frequenz des ersten Trägersignals auf eine erste vorbestimmte Frequenz einzustellen, in Abhängigkeit eines Frequenzbandes einer Kerbe in einer Frequenzantwortcharakteristik zwischen ersten und zweiten Steckdosen (16, 18), die an eine Netzleitung (14) angeschlossen sind;
Multiplizieren der Informationssignale mit dem ersten Trägersignal, nachdem die Frequenz des ersten Trägersignals eingestellt wurde, um die Frequenz des Informationssignals auf ein zweites Frequenzband zu verschieben, welches von dem Frequenzband der Kerbe in der Frequenzantwortcharakteristik zwischen den ersten und zweiten Steckdosen (16, 18), die an eine Netzleitung (14) angeschlossen sind, beabstandet ist
Leiten der Informationssignale nachdem die Frequenz der Informationssignale verschoben wurde, zu der ersten Steckdose (16) zum Senden der Informationssignale über eine Netzleitung (14) zu der zweiten Steckdose (18);
Leiten der Informationssignale von der zweiten Steckdose (18);
Bereitstellen eines zweiten Trägersignals, welches eine zweite vorbestimmte Frequenz aufweist;
Multiplizieren des Informationssignals, das von der zweiten Steckdose (18) geleitet wurde, mit dem zweiten Trägersignal, um die Frequenz des Informationssignals, welches von der zweiten Steckdose (18) geleitet wird, auf ein Frequenzband zu verschieben, welches zumindest näherungsweise das gleiche ist wie das erste Frequenzband;
Leiten der Informationssignale, welche von der zweiten Steckdose (18) geleitet werden, nachdem die Frequenz des Informationssignals, welches von der zweiten Steckdose (18) geleitet wird, verschoben wurde, zu einer Verwendungseinheit (24);
wobei:
(a) die Informationssignalquelle (12) eine Fernsehsignalquelle ist;
(b) die Verwendungseinheit ein Fernsehgerät (24) ist; und
(c) die Schritte des Steuems der Frequenz des ersten Trägersignals die folgendenden Schritte aufweisen:
( 1 ) Steuern der Frequenz des ersten Trägersignals, um selektiv das erste Trägersignal auf die erste vorbestimmte Frequenz einzustellen, in Abhängigkeit eines Kanal 3 oder Kanal 5 Betriebes des Fernsehgeräts (24); und
(2) Steuern der Frequenz des ersten Trägersignals, um selektiv das erste Trägersignal auf die erste vorbestimmte Frequenz einzustellen, in Abhängigkeit von der Frequenzantwortcharakteristik, die eine Kerbe aufweist, zwischen der ersten Steckdose (16) und der zweiten Steckdose (18).

## Revendications

1. Système de communications utilisant une ligne d'alimentation, comprenant :
des premiers moyens (10) de conduction de signaux pour envoyer des signaux d'informations dans une première bande de fréquences à partir d'une source (12) de signaux d'informations;
une ligne d'alimentation (14);
une pluralité de sorties connectées individuellement à ladite ligne d'alimentation (14), incluant une première sortie (16), à laquelle lesdits signaux d'informations sont transmis, et une seconde sortie (18), au niveau de laquelle lesdits signaux d'informations sont reçus;
une unité formant émetteur (20) connectée à ladite première sortie (16) et incluant :
(a) des premiers moyens formant oscillateur (26) pour délivrer un premier signal de porteuse,
(b) des moyens de commande (28) pour commander lesdits moyens formant oscillateur (26) pour régler ledit premier signal de porteuse à une première fréquence prédéterminée en fonction de la bande de fréquences d'une encoche dans la caractéristique de réponse en fréquence entre lesdites première et seconde sorties (16,18),
(c) des premiers moyens multiplieurs (42) pour réaliser une multiplication en fréquence dudit premier signal de porteuse et desdits signaux d'informations pour décaler en fréquence lesdits signaux d'informations vers une seconde bande de fréquences, et
(d) des seconds moyens (48) de conduction de signaux pour conduire lesdits signaux d'informations après ledit décalage effectué par lesdits premiers moyens multiplieurs (42) jusqu'à ladite première sortie (16) pour la transmission desdits signaux d'informations dans ladite ligne d'alimentation (14) jusqu'à ladite seconde sortie (18); et
une unité formant récepteur (22) connectée à ladite seconde sortie (18) et comprenant :
(a) des troisièmes moyens (50) de conduction de signaux pour conduire lesdits signaux d'informations à partir de ladite seconde sortie (18),
(b) des seconds moyens formant oscillateur (54) pour délivrer un second signal de porteuse possédant une seconde fréquence prédéterminée,
(c) des seconds moyens multiplieurs (56) pour réaliser une multiplication en fréquences dudit second signal de porteuse et dudit signal d'information guidés par lesdits second moyens (48) de conduction pour réaliser le décalage en fréquences desdits signaux d'informations conduits par ladite seconde conduction de signal jusqu'à une bande de fréquences au moins approximativement identique à ladite première bande de fréquences, et
(d) des quatrièmes moyens (60) de conduction de signaux pour conduire lesdits signaux d'informations après un décalage de fréquences par lesdits seconds moyens multiplieurs (56) jusqu'à une unité d'utilisation (24);
ladite unité formant émetteur (20) comprend en outre :
(a) des premiers moyens formant amplificateur et dispositif de mise en forme (40) pour amplifier et mettre en forme lesdits signaux d'informations envoyés par lesdits premiers moyens (10) de conduction de signaux à partir de la source (12) de signaux d'information,
(b) des seconds moyens formant amplificateur et dispositif de mise en forme (44) pour amplifier et mettre en forme lesdits signaux d'informations après un décalage de fréquences desdits signaux d'informations par lesdits premiers moyens multiplieurs (42), et
(c) des premiers moyens formant coupleur (46) pour coupler lesdits signaux d'informations auxdits seconds moyens (48) de conduction de signaux après décalage des fréquences desdits signaux d'informations par lesdits premiers moyens multiplieurs (42) et amplification et mise en forme desdits signaux d'informations par lesdits seconds moyens formant amplificateur et dispositif de mise en forme (44); et
dans lequel ladite unité formant récepteur (22) comprend en outre :
(a) des seconds moyens formant coupleur (52) pour coupler lesdits signaux d'informations conduits par lesdits seconds moyens de conduction (50) auxdits seconds moyens multiplieurs (56), et
(b) lesdits troisièmes moyens formant amplificateur et dispositif de mise en forme (58) pour amplifier et mettre en forme lesdits signaux d'informations après décalage de fréquence desdits signaux d'informations par lesdits seconds moyens multiplieurs (56);
**caractérisé en ce que**
lesdits moyens de commande (28) comprennent un interrupteur (30) pour commander lesdits premiers moyens formant oscillateur (26) pour régler sélectivement ledit premier signal de porteuse à ladite première fréquence prédéterminée si ladite caractéristique de réponse en fréquence entre ladite première sortie (16) et ladite seconde sortie (18) comporte une encoche.

2. Système de communications utilisant une ligne d'alimentation selon la revendication 1, dans lequel lesdits signaux d'informations sont des signaux de télévision et l'unité d'utilisation est un appareil de télévision (24).

3. Système de communications utilisant une ligne d'alimentation selon la revendication 2, dans lequel lesdits moyens de commande (28) commandent lesdits premiers moyens formant oscillateur (26) pour régler sélectivement ledit premier signal de porteuse sur ladite première fréquence prédéterminée en fonction du fonctionnement de l'appareil de télévision (24) sur le canal 3 ou le canal 4.

4. Système de communications utilisant une ligne d'alimentation selon la revendication 2, dans lequel lesdits moyens de commande (28) comprennent :
(1) un premier interrupteur (30) servant à commander lesdits moyens formant oscillateur (26) pour sélectivement régler le premier signal de porteuse à ladite première fréquence prédéterminée en fonction du fonctionnement de l'appareil de télévision (24) sur le canal 3 ou le canal 4, et
(2) un second interrupteur (36) pour commander lesdits premiers moyens formant oscillateur (26) pour régler sélectivement ledit premier signal de porteuse sur ladite première fréquence prédéterminée si ladite caractéristique de réponse en fréquence entre ladite première sortie (16) et ladite seconde sortie (18) présente une encoche.

5. Unité formant émetteur pour un système de communications utilisant une ligne d'alimentation, comprenant :
des moyens (10) de conduction de signaux servant à délivrer des signaux d'informations dans une première bande de fréquences à partir d'une source (12) de signaux d'informations;
des moyens formant oscillateur local (26) servant à délivrer un signal de porteuse;
des moyens de commande (28) pour commander lesdits moyens formant oscillateur local pour régler ledit signal de porteuse à une fréquence prédéterminée en fonction de la bande de fréquences d'une encoche dans la caractéristique de réponse en fréquence entre une première sortie (16) dans le système de communications utilisant une ligne d'alimentation, auquel l'unité formant émetteur (20) est adaptée pour être connectée, et une seconde sortie (18) située dans le système de communication utilisant une ligne d'alimentation et auquel une unité formant émetteur (20) est adaptée pour une connexion;
des moyens multiplieurs (42) pour multiplier en fréquences ledit signal de porteuse et lesdits signaux d'informations pour décaler la fréquence dudit signal d'informations vers une seconde bande de fréquences;
des moyens (48) de conduction de signaux pour conduire lesdits signaux d'informations après le décalage en fréquences réalisé par lesdits moyens multiplieurs (42) en direction de la première sortie (7) dans le système de communications utilisant une ligne d'alimentation pour la transmission dudit signal d'informations dans la ligne d'alimentation (14) dans le système de communications utilisant une ligne d'alimentation jusqu'à la seconde sortie (18) dans le système de communications utilisant une ligne d'alimentation;
(1) des premiers moyens formant amplificateur et dispositif de mise en forme (40) pour amplifier et mettre en forme lesdits signaux d'informations envoyés par lesdits moyens (10) de conduction de signaux à partir de la source (12) de signaux d'information,
(2) des seconds moyens formant amplificateur et dispositif de mise en forme (44) pour amplifier et mettre en forme lesdits signaux d'informations après un décalage en fréquence desdits signaux d'informations par lesdits moyens formant multiplieurs (42); et
(3) des moyens formant coupleur (46) pour coupler lesdits signaux d'informations auxdits moyens (48) de conduction de signaux, conduction grâce à laquelle lesdits signaux d'informations sont conduits à la première sortie (16) dans le système de communications utilisant une ligne d'alimentation après le décalage en fréquence desdits signaux d'informations par lesdits moyens formant amplificateur et dispositif de mise en forme (44);
**caractérisée en ce que**
lesdits moyens de commande (28) incluent un interrupteur (30) pour commander lesdits moyens formant oscillateur local (26) pour régler sélectivement ledit signal de porteuse à ladite fréquence prédéterminée si ladite caractéristique de réponse en fréquence entre la première sortie (16) dans le système de communications utilisant une ligne d'alimentation, auquel l'unité formant émetteur (20) est adaptée pour la connexion, et la seconde sortie (18) située dans le système de communication utilisant une ligne d'alimentation, auquel une unité formant émetteur (20) est adaptée pour la connexion de ladite première sortie (16) possède une encoche.

6. Unité formant émetteur pour un système de communications utilisant une ligne d'alimentation selon la revendication 5, dans laquelle lesdits signaux d'informations sont des signaux de télévision.

7. Unité formant émetteur pour un système de communications utilisant une ligne d'alimentation selon la revendication 6, dans laquelle lesdits moyens de commande (28) commandent lesdits moyens formant oscillateur local (26) pour régler sélectivement ledit signal de porteuse à ladite fréquence prédéterminée en fonction du fonctionnement sur le canal 3 ou sur le canal 4.

8. Unité formant émetteur pour un système de communications utilisant une ligne d'alimentation selon la revendication 6, dans laquelle lesdits moyens de commande (28) comprennent :
(1) un premier interrupteur (30) pour commander lesdits moyens formant oscillateur local (26) pour régler sélectivement ledit signal de porteuse à ladite fréquence prédéterminée en fonction du fonctionnement sur le canal 3 ou le canal 4, et
(2) un second interrupteur (36) pour commander lesdits moyens formant oscillateur local (26) pour régler sélectivement ledit signal de porteuse à ladite fréquence prédéterminée si la caractéristique de réponse en fréquence entre la première sortie (16) dans le système de communications utilisant une ligne d'alimentation, auquel l'unité formant émetteur (20) est adaptée pour la connexion, et la seconde sortie (18) dans le système de communications utilisant une ligne d'alimentation, auquel une unité formant émetteur (20) est adaptée pour la connexion de ladite première sortie, possède une encoche.

9. Procédé pour supprimer l'effet d'une encoche dans la caractéristique de réponse en fréquence entre des première et seconde sorties (16,18) dans un système de communications utilisant une ligne d'alimentation, comprenant les étapes consistant à :
envoyer des signaux d'informations dans une première bande de fréquences à partir d'une source (12) de signaux d'informations;
envoyer un premier signal de porteuse;
commander la fréquence dudit premier signal de porteuse pour régler la fréquence dudit premier signal de porteuse sur une première fréquence prédéterminée en fonction d'une bande de fréquences d'une encoche dans une caractéristique de réponse en fréquence entre des première et seconde sorties (16,18) connectées à une ligne d'alimentation (14); multiplier lesdits signaux d'informations par ledit premier signal de porteuse après que la fréquence dudit premier signal de porteuse a été réglée pour décaler la fréquence desdits signaux d'informations vers une seconde bande de fréquences espacée de la première bande de fréquences d'une encoche dans la caractéristique de réponse en fréquence entre lesdites première et seconde sorties (16,18) connectées à une ligne d'alimentation (14);
conduire lesdits signaux d'informations après que la fréquence desdits signaux d'informations a été décalée jusqu'à ladite première sortie (16) de transmission desdits signaux d'informations dans une ligne d'alimentation (14) jusqu'à ladite seconde sortie (18);
conduire lesdits signaux d'informations à partir de ladite seconde sortie (18);
envoyer le second signal de porteuse possédant une seconde fréquence prédéterminée;
multiplier lesdits signaux d'informations conduits par ladite seconde sortie (18) par ledit second signal de porteuse pour décaler la fréquence desdits signaux d'informations conduits à partir de ladite seconde sortie (18) jusqu'à une bande de fréquences au moins approximativement identiques à ladite première bande de fréquences; et
conduire lesdits signaux d'informations conduits à partir de ladite seconde sortie (18) après que la fréquence desdits signaux d'informations conduits à partir de ladite seconde sortie (18) a été décalée, jusqu'à une unité d'utilisation (24),
selon lequel:
(a) ladite source (12) de signaux d'informations (12) est une source de signaux de télévision,
(b) ladite unité d'utilisation est un appareil de télévision (24), et
(c) l'étape de commande de la fréquence de ladite première porteuse inclut les étapes consistant à :
(1) commander la fréquence dudit premier signal de porteuse pour régler sélectivement ledit premier signal de porteuse à une première fréquence prédéterminée dépendant du fonctionnement de l'appareil de télévision (24) sur le canal 3 ou le canal 4, et
(2) commander la fréquence dudit premier signal de porteuse pour régler sélectivement ledit premier signal de porteuse à ladite première fréquence prédéterminée en fonction de ladite caractéristique de réponse en fréquence entre ladite première sortie (16) et ladite seconde sortie (18) possédant une encoche.
